# EUROPEAN PATENT SPECIFICATION

(11) **EP 4 359 294 B1**
(45) Date of publication and mention of the grant of the patent: **17.09.2025**
(21) Application number: 22734076.7
(22) Date of filing: 24.06.2022
(51) Int. Cl.: B62M 6/55, B62M 11/14

(54) **MID-DRIVE MODULE FOR A PEDAL-POWERED VEHICLE**
MITTELANTRIEBSMODUL FÜR EIN PEDALGETRIEBENES FAHRZEUG
MODULE D'ENTRAÎNEMENT DE PÉDALIER POUR VÉHICULE À PÉDALES

(30) Priority: 24.06.2021 NL 2028537
(43) Date of publication of application: 01.05.2024
(73) Proprietor: Roetz-Bikes B.V., 1021 KD Amsterdam (NL)
(72) Inventor: TER HOEVEN, Tiemen, 1021 KD AMSTERDAM (NL); ADRIAANSENS, Bobby, 1021 KD AMSTERDAM (NL); WIT, Olaf, 1021 KD AMSTERDAM (NL)
(74) Representative: EP&C
(86) International application number: PCT/NL2022/050364
(87) International publication number: WO 2022/271028

(56) References cited:
- WO-A1-2011/013109
- WO-A1-2018/226095
- WO-A1-2021/038358
- CN-A- 107 089 292
- CN-U- 206 826 852
- CN-Y- 2 306 943
- DE-A1- 102014 223 335
- DE-T5- 112018 002 128
- JP-A- H08 295 284
- JP-A- H1 081 292
- JP-A- H10 258 788
- JP-A- H11 240 481
- US-A- 5 758 736
- US-A- 5 836 414
- US-A- 708 827
- US-A1- 2016 052 595
- US-A1- 2017 073 039

## Description

### Field of technology

The invention relates to drive modules, and, in particular, though not exclusively, to a mid-drive module for a pedal-powered vehicle such as a bicycle and a pedal-powered vehicle comprising such mid-drive module.

### Background

US2016/052595 discloses the preamble of claim 1.

Pedal-powered vehicles, e.g. bicycles, comprising a mid-drive system typically adhere to a traditional configuration by locating the internal gear hub (IGH) in the rear wheel. Such configuration may be suboptimal for several reasons. A first problem relates to inefficient transfer of motor power. Brushless DC motors run most efficiently at high RPMs. In a mid-drive bicycle, the motor RPM has to be reduced to an RPM comparable with human pedal input. Thereafter, when power is transmitted to the rear wheel, the rotational speed is stepped up again resulting in inefficient transfer of power. Further, commodity IGHs are not designed to cope with higher torques that occur in e-bicycles. When located in the rear wheel, IGHs become the limiting factor for torques that can be applied by the motor. IGHs located in the rear wheel are prone to failure from rain and dirt. Additionally, the location of the IGH in the rear wheel increases complexity of repairs. The rear wheel is one of the most intensely loaded parts of the bike (majority of weight on the rear wheel) and is continuously impacted. For this reason parts of the rear wheel (tire, rim, spoke) have a high defect rate. Locating an expensive and complex IGH in such a part is not optimal for repairs or even makes repairs more complex and expensive.

Pedal-powered vehicles based on mid-drive systems wherein the gearbox is moved away from the rear wheel are known. For example, WO2019206835 describes a bicycle transmission system that is configured as a mid-drive system wherein the electric motor is integrated in the downtube of the bicycle frame. The motor is connected via an angle drive to a gearbox that is arranged around the crank axle of the bicycle. Similarly, US2016/0052595 describes a pedal-powered bike comprising a mid-drive system comprising a continuously variable transmission CVT gearing structure based on a V-shaped friction belt. A relatively complex gearing structure, comprising one or more planetary gears and the CVT, is used to connect the crank and the motor to an front sprocket (the output of the mid-drive system) that is coaxial with the crank axle. The front sprocket is subsequently connected via a chain drive in an overdrive configuration to the rear axle of the bike.

The design of these prior art mid-drive systems is complex and does not allow simple repair, removability and upgradability, i.e. aspects that are essential for providing bicycle maintenance services for e-bike fleets and cargo bikes that are used by delivery companies. Further, the design still requires the gear box to work at relatively low RPM and high torque thus not providing optimal power transmission to the rear wheel.

Hence, from the above, it follows that there is a need in the art for improved mid-drive systems for pedal-powered vehicles, in particular there is a need in the art for improved mid-drive systems for pedal-powered vehicle that are compact, have a simple design, are suitable for use with commodity IGHs, and provide flexible repair and replacement of (parts of) the mid-drive system.

### Summary

It is an aim of the embodiments in this application to address problems related to conventional electrical pedal-powered vehicle comprising a mid-drive system.

To address problems such as circular design and improved performance of mid-drive systems for pedal-powered vehicles, the embodiments include a gearbox, for example a conventional commodity multi-speed IGH, which is located in the drive module of the bike. The use of such a gearbox takes advantage of a thoroughly developed and engineered complex mechanical function. Relocating the gearbox into the drive module further provides protection from rain and water and simplification of the rear wheel, thus reducing costs and complexity of the most common repair. Further, the efficiency of the power transfer may be improved by a partial reduction of the motor speed via a jackshaft before connecting it to the output axle of the drive module and further stepping down the speed to get to the rear wheel. Moving the gearbox into the drive module allows it to be run faster, meaning lower torque transfer to the IGH. Further, belts, preferably toothed belts, may be used resulting in a quiet and maintenance-friendly system using a simple consumable component to replace during re-manufacture.

The system may be designed such that it can be implemented in different pedal-powered vehicle configurations, e.g. city bikes, speed pedelecs, cargo bikes, tricycle and quadricycle bikes, etc. The system can be modified to such applications by changing a few components.

The invention relates to a mid-drive system for a pedal-powered vehicle according to claim 1.

In an embodiment, the gearbox may be implemented as an internal gear hub (IGH).

Hence, in contrast to known mid-drive systems, the motor may be located on or around the crank shaft, but not connected to the crank shaft of the pedal-powered vehicle. This allows the drive system to be a contained unit which can be removed from the pedal-powered vehicle for swapability. Further, it enables the system to be a single removable unit which provides substantial advantages in maintainability and upgradability. Further, the gearbox is not mounted to the crank shaft. Instead, it is mounted to a separate output shaft and is overdriven by an overdrive transmission structure, e.g. a planetary gear assembly, located on the crank shaft. This way, the gearbox can be used at higher RPM and lower torque with further reduction in the end drive to generate more torque at the rear wheel. In an embodiment, the belt of the first belt drive may be a toothed belt. In an embodiment, the planet gears may form the input of the first overdrive transmission structure and the sun gear may form the output of the first overdrive transmission structure.

Additionally, the design allows connection of the motor to the gearbox either through the input axle or the output axle of the gearbox. Connecting the motor to the output of the gearbox avoids that the power of the motor is transmitted through the gearbox, thereby enabling reduction of the wear of the gearbox. In that case, the structure of the gearbox can be made simpler, not requiring extra structural robustness against the torque of the motor. Connecting the motor to the input of the gearbox can be advantageous in case the bicycle is configured for heavy loads or to climb steep inclines, e.g. a cargo bicycle that is used for delivery services or a bicycle that is used in mountainous terrain.

In an embodiment, the output of the motor may be connected via a second reduction transmission structure to the output axle of the first overdrive transmission structure. In that case, a reduction may be used to match the rotational speed of the motor with the rotational speed of the input of the gearbox which receives a driving force of the user of the bicycle at its input.

In an embodiment, the first reduction transmission structure may comprise a second belt or chain drive for connecting the output of the motor to the input axle of the gearbox. In an embodiment, the belt of the second belt drive may be configured as a toothed belt.

In an embodiment, the first overdrive transmission structure may comprise a planetary gear for providing an overdrive in the transmission between the crank shaft and the input of the gearbox.

In an embodiment, the gearbox, the motor, the first overdrive transmission structure, the first reduction transmission structure and the first belt or chain drive may be contained in a housing.

In an embodiment, the electric motor may be positioned in front of the crank shaft of the pedal-powered vehicle.

In an embodiment, the electric motor may be positioned behind the crank shaft of the pedal-powered vehicle.

In an embodiment, the mid-drive system may comprise a mounting structure for mounting the mid-drive system to a frame of the pedal-powered vehicle, the mounting system comprising an adjusting mechanism to adjust the position of the mid-drive system relative to the rear axle of the pedal-powered vehicle.

In an embodiment, the rotational axis of the motor may coincide with the rotational axis of the crank shaft.

In an aspect, the invention may relate to a pedal-powered vehicle comprising a mid-drive system according to any of the embodiments described above.

In an embodiment, the output axle of the mid-drive system may be connected to a rear axle of the pedal-powered vehicle based on a third reduction transmission structure.

In an embodiment, the third reduction transmission structure may comprise a third belt or chain drive. In an embodiment, the belt of the third belt drive may be configured as a toothed belt.

In an embodiment, the mid-drive system may be mounted to the frame based on the mounting structure and wherein the adjusting mechanism is configured to adjust tensioning of a belt or chain of the third belt or chain drive respectively.

The invention will be further illustrated with reference to the attached drawings, which schematically will show embodiments according to the invention. It will be understood that the invention is not in any way restricted to these specific embodiments.

### Brief description of the drawings

**Fig. 1A-1C** depicts a mid-drive system for a pedal-powered vehicle according to an embodiment of the invention;
**Fig. 2** depicts a side view of part of a pedal-powered vehicle comprising a mid-drive module according to an embodiment of the invention.
**Fig. 3** depicts a side view of part of a pedal-powered vehicle comprising a mid-drive module according to another embodiment of the invention.
**Fig. 4** depicts a mid-drive system for a pedal-powered vehicle according to another embodiment of the invention;
**Fig. 5** depicts a mid-drive system for a pedal-powered vehicle according to yet another embodiment of the invention;
**Fig. 6** depicts a side view of part of a pedal-powered vehicle comprising a mid-drive module according to an embodiment of the invention.

### Description of the embodiments

The embodiments in this application relate to a mid-drive system design which does not exhibit the disadvantages of known mid-drive systems. In conventional mid-drive pedal-powered vehicles, the motor is typically located at the crank and the internal gear hub (IGH) in the rear wheel. As the cyclist pedals, the power generated by the electric motor flows through a reduction gear to join the human power at the crank / bracket axle. Electric motors however are most efficient at high RPM, while the crank RPM is very low. The system therefore needs a significant reduction to adapt the RPM. After joining at the crank, combined human and electric power flows are transmitted by chain or belt, and the RPM is increased again by the crank to rear sprocket ratio (typical factor would be 2.2 - 2.5 for an e-bike). This means the electric power flow follows a suboptimal path on regular mid-drive designs, which includes first reducing and then increasing RPM. In these designs, the IGH rotates at wheel speed, which is the limiting factor in terms of torque. Mid-drive systems are usually limited by software at 50 Nm to prevent damage to the rear wheel.

The embodiments in this application relate to mid-drive systems for pedal-powered vehicles, wherein the gearbox, such as an IGH, and the motor are located together allowing a very compact design. Further, in some embodiments, a fourth axle, e.g. a middle jackshaft, in between the motor and the crank is introduced allowing decrease of the RPM gap between the crank and the motor to a point where chains or belts can be used to create transmissions. This, in turn, may provide a system which is less sensitive to wear and which has a higher efficiency compared to conventional systems. As the gearbox is independent of rear wheel rotation, it can rotate at its own (higher) speed and have minimal torque acting on it thereby providing a longer lifespan for the gearbox.

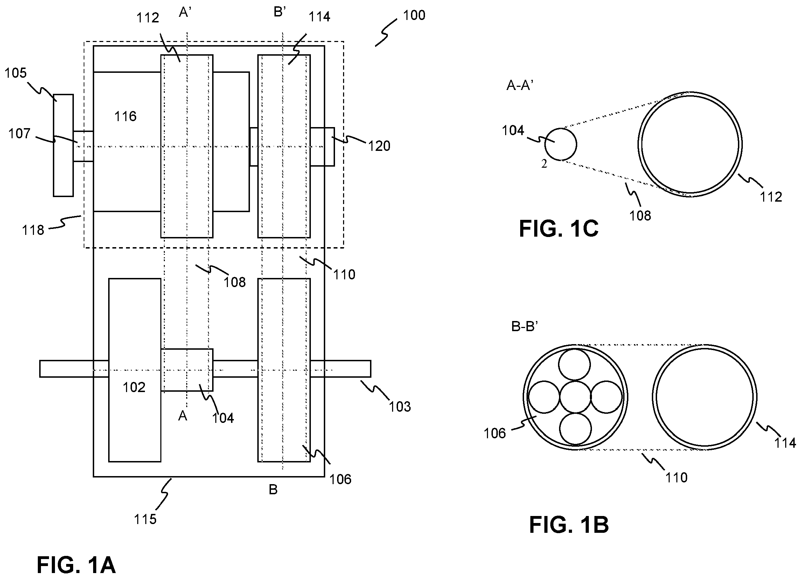

**Fig. 1A-1C** illustrate a mid-drive system according to an embodiment of the invention. In particular, **Fig. 1A** depicts a first cross-sectional view of the mid-drive system **100** for pedal-powered vehicle, wherein the mid-drive system includes a motor **102** and a planetary gear **106** connected to an axle **103** of a crank system. In an embodiment, the motor may be positioned around the axle of the crank system without being connected to it. Further, the motor and planetary gear may be connected via one or more power transmission structures to an the gearbox **116.** In an embodiment, the gearbox may be configured as an internal gear hub (IGH). Any type of IGHs may be used, including conventional IGHs. In an embodiment, the IGH may be configured as multi-speed gearing structure comprising a finite number of gear ratios. For example, the IGH may be a 3,5,7 of 18 speed IGH. In another embodiment, the IGH may be configured as a continuously variable transmission gearing structure. The IGH may comprise a gearing mechanism in a closed housing which can be set at different gearings. In an embodiment, the power transmission structures for connecting the motor and/or planetary gear to the IGH may include a belt drive or chain drive. The motor, the crank structure and the IGH may be arranged in a protective housing **115.**

The crank structure may include cranks connected to pedals for transmitting human power to the planetary gear **106** that is connected to the crank axle **103.** As shown in a second cross-sectional view of the mid-drive system of **Fig. 1B****,** the axles of the crank and the IGH may be arranged substantially parallel so that the planetary gear **106** can be connected via a first chain or belt drive **110** to a first input pulley **114** of the IGH.

As shown in the figure, the planetary gear may include planet gears configured connected to the crack for receiving human input. The planet gears evolve around a sun gear which is configured as the output of the planetary gears. This way, the planetary gear may form an overdrive transmission structure. The output of the planetary gear may be connected to an output pully so that it can be connected to the first input pully of the IGH based on the first belt or chain drive. In an embodiment, the output pully of the planetary gear, the belt or chain, and the first input pully may form a further reduction transmission structure between the crank and the IGH.

The IGH may include an input axle **120** connected to an input pulley **114,** wherein the input pulley may run on a speed depending on the selected gear. Further, the IGH may comprise an output axle **107** connected to an end drive pulley **105.** A third cross-sectional view of the mid-drive system of **Fig. 1C** shows that an output pulley **104** of the motor may be connected via a second belt **108** to a second output pulley **112** that is connected to the output axle of the IGH. The end drive pulley **105** may be connected to a rear pulley of the rear wheel (not shown). Hence, in the embodiment of **Fig. 1A-1C**, an output pulley of the motor is introduced as a fourth axle in the drive system, which is directly connected to the output axle of the IGH structure.

Connecting the output of the motor directly to the output of the IGH structure causes the torque of the motor not to be transmitted through the IGH, thus reducing the wear of the IGH. The output pulley of the motor and the first output pulley of the IGH may be selected so that a gear reduction is realized for achieving increased torque. Further, it allows the motor to use regenerative braking. In contrast, the crank axle **103** may be connected to the planetary gear **106** to achieve an overdrive gearing, which may be used to reduce the torque that is exerted by the user via the pedals and the crank system. As a biker exerts force onto the pedals, human power is transmitted via the planetary gear to the input pulley of the IGH structure. Preferably, the power may be transmitted to the input pulley of the IGH based on a belt or chain drive. Here, the planetary gear is selected as an overdrive gearing to reduce the torque that is exerted on the belt. This way, wear of the belt may be avoided or at least substantially minimized. The input pulley may run at different speeds depending on the gear that is selected for the internal gear hub. When a sensor, e.g. a throttle or torque sensor is activated it may send power to the motor so that the output pulley of the motor drives the output axle of the internal gear hub structure using a belt or chain drive. Thus, the IGH effectively joins (combines) the human power and the motor power. This way, a mid-drive module for a pedal-powered vehicle is realized that combines the power of the motor and the human power based on a conventional IGH and belts. The design is compact, silent and particularly flexible and efficient regarding repairs.

The mid-drive system as depicted in **Fig. 1A-1C** may use a commodity (standard) IGH that is normally used in the rear wheel of a bike. Transferring the IGH from the rear wheel to the mid-drive system allows reduction of the mechanical complexity of the rear wheel. In this way, the rear wheel can be easily removed and repaired. Further, it allows the IGH to be contained in a housing thereby protecting it from dirt and moisture. The relocation also allows the IGH to run (rotate) faster (typically two times faster) compared to a rear-wheel drive system. Allowing the IGH to run faster means that the torque exerted onto the IGH is lower, thus reducing the wear and chance of defects of the IGH.

In an embodiment, instead of a transmission based on belts and pulleys, chains and sprockets may be used for transmission. In an embodiment, the chains may be self-lubricating chains. In that case, the planetary gear **106** may be replaced by an overdrive chain sprocket set. In a further embodiment, the electric motor may be connected to the output of the IGH using a timing belt.

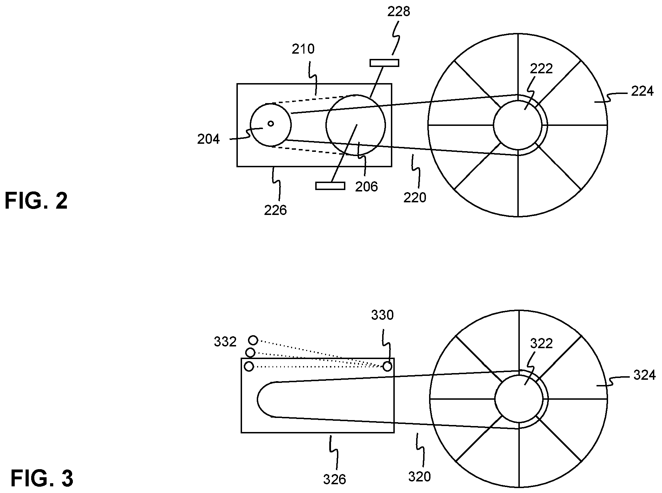

**Fig. 2** depicts a side view of part of a pedal-powered vehicle comprising a mid-drive module according to an embodiment of the invention. As shown in the figure, the vehicle includes a drive system comprising a first axle **206** connected to a crank structure **228** and a planetary gear as described with reference to **Fig. 1****.** Further the motor may be arranged around the crank shaft (but not connected to the first axle). The drive system may further include a second axle **204** of the gearbox, for example an IGH comprising an input axle and an output axle. Further, the drive system may be contained in a protective housing **226.** The output of the planetary gear may be connected with a belt or a chain to the input pulley or sprocket of the IGH. Similarly, the output of the motor may be connected with a belt or chain to the output of the IGH. As shown in the figure, in this embodiment, the crank structure of the vehicle may be positioned between the IGH and the back wheel I **224.** The output of the IGH may be connected via an end drive belt or chain **220** to the rear axis of the rear wheel **224.**

**Fig. 3** depicts a side view of part of a pedal-powered vehicle comprising a mid-drive module illustrating the housing of the mid-drive system mounted to a frame of the vehicle based on a mounting structure **330, 332.** In particular, the mounting structure may include a first mounting point **330** and a second adjustable mounting point **332.** The first mounting point allows the housing **326** of the drive system to be rotatably mounted onto the frame of the vehicle. Here, the axis of rotation runs parallel to the rotational axis of the axle of the crank structure. The second mounting point allows the housing of the drive to be fixed to the frame, wherein the second mounting point may be adjustable so that the angular position of the housing relative to the frame can be adjusted. The adjustment in the angular position of the motor relative to the frame may be used to adjust the tensioning of the end drive belt or chain **320** that is connected to the rear axis **322** of the rear wheel **324.**

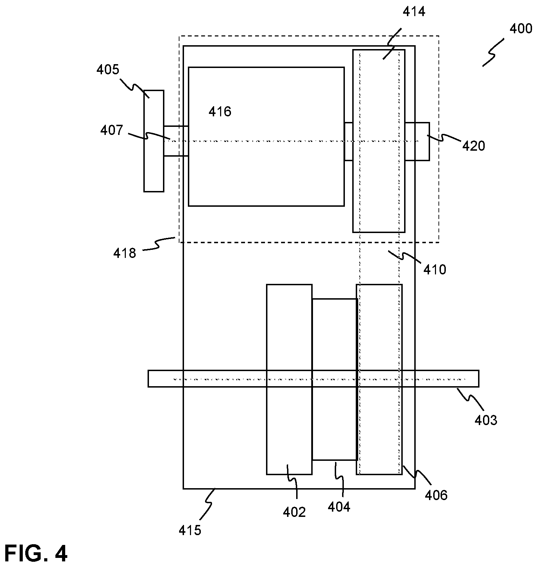

**Fig. 4** illustrates a mid-drive system according to another embodiment of the invention. In particular, **Fig. 4** depicts a cross-sectional view of the mid-drive system **400** including a motor **402** and a planetary gear **406** connected to an axle **403** of a crank system. The motor may be positioned around the axle of the crank system without being connected to it. Further, the planetary gear may be connected via one or more power transmission structures to an internal gear hub (IGH) **416** in a similar way as described with reference to **Fig. 1A-1C**. Also in this embodiment, the power transmission structures for connecting the planetary gear to the IGH structure may include a belt or chain drive. The crank structure may include cranks connected to pedals for transmitting human power to the planetary gear 406 that is connected to the crank axis. The IGH may include an input axle **420** connected to an input pulley **414,** wherein the input pulley may run on a speed depending on the selected gear. Further, an output axle **407** of the IGH may be connected to an end drive pulley **405,** which may be connected to a rear pulley of the rear wheel (not shown).

In contrast to the embodiment depicted in **Fig. 1A-1C****,** in this embodiment the output of the motor **402** is not connected to the output axle of the IGH. Instead, the output of the motor is connected via a reduction transmission structure **404** to the output of planetary gear **406.** Here, reduction transmission structure **404** may be implemented based on a planetary reduction gear or any other suitable reduction gear. Hence, in this embodiment, the motor is connected (via a reduction) to the output of the planetary gear, which has an input that is connected to the crank structure of the vehicle. This way, both motor power and human power is combined and transmitted via a single belt to the input of the IGH. The IGH is driven by both motor power and human power, which may be advantageous for high-load applications, e.g. in the case of a cargo bike.

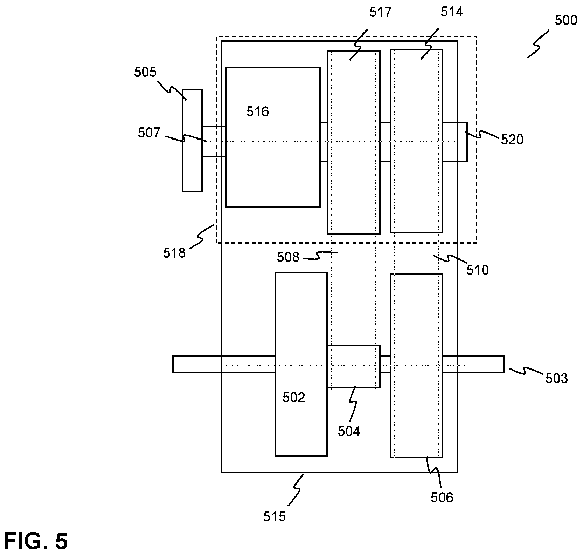

**Fig. 5** illustrates a mid-drive system for a pedal-powered vehicle according to yet another embodiment of the invention. In particular, **Fig. 5** depicts a cross-sectional view of the mid-drive system **500** that is similar to the mid-drive system of **Fig. 4****,** including a motor **502,** a planetary gear **506** connected to an axle **503** of a crank system, an internal gear hub (IGH) structure **516** having an input axle **520** and an output axle **507** connected to an output pulley **505.** Hence, the input axle of the IGH may run at a speed depending on the selected gear. The crank structure may include cranks connected to pedals for transmitting human power to the planetary gear **506** that is connected to the crank axis. To transmit the human power, the output of the planetary gear may be connected to the input axle **520** of the IGH based on a first input pulley **514.** Similarly, to transmit the motor power, the output pulley **504** of the motor may be connected via a second belt **508** to a second input pulley **517** of the IGH. The end drive pulley **505** may be connected to a rear pulley of the rear wheel (not shown).

Hence, in this embodiment, both the motor power and human power is combined and transmitted via two separate belts to the input of the gearbox, which provides a more silent drive and a simpler and more flexible design. The gearbox is driven by both motor power and human power, which may be advantageous when using the pedal-powered vehicle for carrying heavy loads, e.g. in the case of a cargo bicycle.

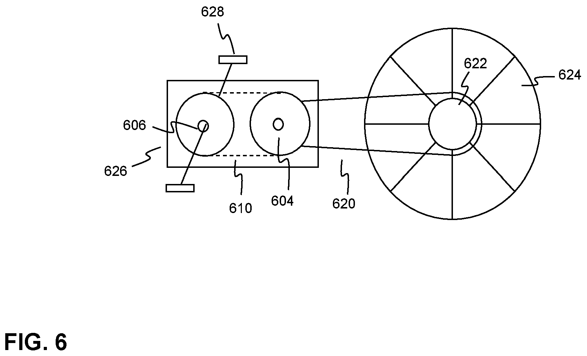

**Fig. 6** depicts a side view of part of a pedal-powered vehicle comprising a mid-drive module according to yet another embodiment of the invention. As shown in the figure, the vehicle includes a drive system comprising a first axle **606** connected to a crank structure **628** and a planetary gear. Further the motor may be arranged around the motor (but not connected to the first axle). The drive system may further include a second axle **604** of the gearbox, for example an IGH comprising an input axle and an output axle. The drive system may be contained in a protective housing **626.** The output of the planetary gear may be connected with a belt or a chain to the input pulley or sprocket of the IGH. Similarly, the output of the motor may be connected with a belt or chain to the output of the IGH. The output of the IGH may be connected via an end drive belt or chain **620** to the rear axis of the rear wheel **624**.In this embodiment, however, the crank structure of the vehicle may be positioned in front of the motor.

The terminology used herein is for the purpose of describing particular embodiments only and is not intended to be limiting of the invention. As used herein, the singular forms "a," "an," and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. The description of the present invention has been presented for purposes of illustration and description, but is not intended to be exhaustive or limited to the invention in the form disclosed. embodiment was chosen and described in order to best explain the principles of the invention and the practical application, and to enable others of ordinary skill in the art to understand the invention for various embodiments with various modifications as are suited to the particular use contemplated.

## Claims

1. A mid-drive system for a pedal-powered vehicle comprising:
an electric motor (102) located on or in the vicinity of a crank shaft (103) of the vehicle;
a first overdrive transmission structure (106) comprising an input axle connected to the crank shaft;
a gearbox (116) comprising an input axle (120) and an output axle (107), the output axle being connectable to a rear axle of the vehicle;
wherein output of the first overdrive transmission structure (106) is connected to the input axle of the gearbox based on a first belt or chain drive (110); and,
wherein output of the motor is connected to the gearbox based on a first reduction transmission structure, **characterized by** the first reduction transmission structure comprising a second belt or chain drive (108) for connecting the output (104) of the motor to the output axle or the input axle of the gearbox (116).

2. Mid-drive system according to claims 1, wherein the first overdrive transmission structure comprises a planetary gear (106), preferably the planet gears of the planetary gear forming the input of the first overdrive transmission structure and the sun gear of the planetary gear forming the output of the first overdrive transmission structure.

3. Mid-drive system according to claims 1 or 2, wherein the first belt or chain drive (110) connecting the output of the first overdrive transmission structure with the input axle of the gearbox is configured as a further reduction or overdrive transmission structure.

4. A mid-drive system according to any of claims 1-3, wherein the gearbox (116), the motor (102), the first overdrive transmission structure (106), the first reduction transmission structure (108), the first belt or chain drive (110) and the second belt or chain drive (108) are contained in a housing (115).

5. A mid-drive system according to any of claims 1-4, wherein the electric motor is positioned in front of the crank shaft (103) of the vehicle.

6. A mid-drive system according to any of claims 1-5, wherein the electric motor is positioned behind the crank shaft (103) of the vehicle.

7. A mid-drive system according to any of claims 1-6, wherein the mid-drive system comprises a mounting structure for mounting the mid-drive system to a frame of the vehicle, the mounting system (330,332) comprising an adjusting mechanism to adjust the position of the mid-drive system relative to the rear axle of the vehicle.

8. A mid-drive system according to any of claims 1-7, wherein the rotational axis of the motor (102) coincides with the rotational axis of the crank shaft (103).

9. A mid-drive system according to any of claims 1-8, wherein the gearbox is (116) configured as an internal gear hub.

10. A mid-drive system according to claim 9, wherein the internal gear hub (116) comprises a gearing mechanism which can be set at different gearings, preferably the gearing mechanism being contained in a closed housing.

11. A mid-drive system according to any of claims 1-10, wherein the output axle (107) comprises a pully (105) configured to receive a belt or a chain connecting the rear axle of the vehicle to the output axle of the gearbox.

12. A pedal-powered vehicle, for example a bicycle, comprising a mid-drive system according to any of claims 1-11.

13. A pedal-powered vehicle according to claim 12, wherein the output axle (107) is connected to a rear axle of the vehicle based on a third reduction transmission structure.

14. A pedal-powered vehicle according to claim 13, wherein the third reduction transmission structure comprising a third belt or chain drive (105).

15. A pedal-powered vehicle according to claim 14, wherein the mid-drive system is mounted to a frame of the vehicle based on the mounting structure (330,332) to adjust the position of the mid-drive system relative to the rear axle of the vehicle, wherein adjustment of the position of the mid-drive system provides adjustment of tensioning of a belt or chain of the third belt or chain drive respectively.

## Patentansprüche

1. Mittelantriebssystem für ein pedalbetriebenes Fahrzeug, umfassend:
einen Elektromotor (102), der sich auf oder in der Nähe einer Kurbelwelle (103) des Fahrzeugs befindet;
eine erste Schonganggetriebestruktur (106), die eine mit der Kurbelwelle verbundene Eingangsachse umfasst;
ein Getriebe (116), das eine Eingangsachse (120) und eine Ausgangsachse (107) umfasst, wobei die Ausgangsachse mit einer Hinterachse des Fahrzeugs verbindbar ist;
wobei der Ausgang der ersten Schonganggetriebestruktur (106) basierend auf einem ersten Riemen- oder Kettentrieb (110) mit der Eingangsachse des Getriebes verbunden ist; und
wobei der Ausgang des Motors basierend auf einer ersten Untersetzungsgetriebestruktur mit dem Getriebe verbunden ist, **dadurch gekennzeichnet, dass** die erste Untersetzungsgetriebestruktur einen zweiten Riemen- oder Kettentrieb (108) zum Verbinden des Ausgangs (104) des Motors mit der Ausgangsachse oder der Eingangsachse des Getriebes (116) umfasst.

2. Mittelantriebssystem nach Anspruch 1, wobei die erste Schonganggetriebestruktur ein Planetengetriebe (106) umfasst, wobei vorzugsweise die Planetenräder des Planetengetriebes den Eingang der ersten Schonganggetriebestruktur bilden und das Sonnenrad des Planetengetriebes den Ausgang der ersten Schonganggetriebestruktur bildet.

3. Mittelantriebssystem nach Anspruch 1 oder 2, wobei der erste Riemen- oder Kettentrieb (110), der den Ausgang der ersten Schonganggetriebestruktur mit der Eingangsachse des Getriebes verbindet, als eine weitere Untersetzungs- oder Schonganggetriebestruktur ausgelegt ist.

4. Mittelantriebssystem nach einem der Ansprüche 1-3, wobei das Getriebe (116), der Motor (102), die erste Schonganggetriebestruktur (106), die erste Untersetzungsgetriebestruktur (108), der erste Riemen- oder Kettentrieb (110) und der zweite Riemen- oder Kettentrieb (108) in einem Gehäuse (115) enthalten sind.

5. Mittelantriebssystem nach einem der Ansprüche 1-4, wobei der Elektromotor vor der Kurbelwelle (103) des Fahrzeugs positioniert ist.

6. Mittelantriebssystem nach einem der Ansprüche 1-5, wobei der Elektromotor hinter der Kurbelwelle (103) des Fahrzeugs positioniert ist.

7. Mittelantriebssystem nach einem der Ansprüche 1-6, wobei das Mittelantriebssystem eine Montagestruktur zum Montieren des Mittelantriebssystems an einem Rahmen des Fahrzeugs umfasst, wobei das Montagesystem (330, 332) einen Verstellmechanismus umfasst, um die Position des Mittelantriebssystems relativ zur Hinterachse des Fahrzeugs zu verstellen.

8. Mittelantriebssystem nach einem der Ansprüche 1-7, wobei die Drehachse des Motors (102) mit der Drehachse der Kurbelwelle (103) zusammenfällt.

9. Mittelantriebssystem nach einem der Ansprüche 1-8, wobei das Getriebe (116) als eine Nabenschaltung ausgelegt ist.

10. Mittelantriebssystem nach Anspruch 9, wobei die Nabenschaltung (116) einen Getriebeübersetzungsmechanismus umfasst, der in unterschiedlichen Getriebeübersetzungen einstellbar ist, wobei der Getriebeübersetzungsmechanismus vorzugsweise in einem geschlossenen Gehäuse enthalten ist.

11. Mittelantriebssystem nach einem der Ansprüche 1-10, wobei die Ausgangsachse (107) eine Riemenscheibe (105) umfasst, die dazu ausgelegt ist, einen Riemen oder eine Kette aufzunehmen, der/die die Hinterachse des Fahrzeugs mit der Ausgangsachse des Getriebes verbindet.

12. Pedalbetriebenes Fahrzeug, zum Beispiel ein Fahrrad, umfassend ein Mittelantriebssystem nach einem der Ansprüche 1-11.

13. Pedalbetriebenes Fahrzeug nach Anspruch 12, wobei die Ausgangsachse (107) basierend auf einer dritten Untersetzungsgetriebestruktur mit einer Hinterachse des Fahrzeugs verbunden ist.

14. Pedalbetriebenes Fahrzeug nach Anspruch 13, wobei die dritte Untersetzungsgetriebestruktur einen dritten Riemen- oder Kettentrieb (105) umfasst.

15. Pedalbetriebenes Fahrzeug nach Anspruch 14, wobei das Mittelantriebssystem basierend auf der Montagestruktur (330, 332) an einem Rahmen des Fahrzeugs montiert ist, um die Position des Mittelantriebssystems relativ zur Hinterachse des Fahrzeugs zu verstellen, wobei eine Verstellung der Position des Mittelantriebssystems eine Verstellung der Spannung eines Riemens bzw. einer Kette des dritten Riemen- oder Kettentriebs bereitstellt.

## Revendications

1. Système d'entraînement central pour véhicule actionné par pédales comprenant :
un moteur électrique (102) situé sur ou à proximité d'un vilebrequin (103) du véhicule ;
une première structure de transmission de surmultiplication (106) comprenant un essieu d'entrée relié au vilebrequin ;
une boîte de vitesses (116) comprenant un essieu d'entrée (120) et un essieu de sortie (107), l'essieu de sortie pouvant être relié à un essieu arrière du véhicule ;
la sortie de la première structure de transmission de surmultiplication (106) étant reliée à l'essieu d'entrée de la boîte de vitesses sur la base d'un premier entraînement par courroie ou chaîne (110) ; et,
la sortie du moteur étant reliée à la boîte de vitesses sur la base d'une première structure de transmission de réduction, **caractérisé en ce que** la première structure de transmission de réduction comprend un deuxième entraînement par courroie ou chaîne (108) pour relier la sortie (104) du moteur à l'essieu de sortie ou à l'essieu d'entrée de la boîte de vitesses (116).

2. Système d'entraînement central selon la revendication 1, la première structure de transmission de surmultiplication comprenant un engrenage planétaire (106), de préférence les satellites de l'engrenage planétaire formant l'entrée de la première structure de transmission de surmultiplication et la roue solaire de l'engrenage planétaire formant la sortie de la première structure de transmission de surmultiplication.

3. Système d'entraînement central selon la revendication 1 ou 2, le premier entraînement par courroie ou chaîne (110) reliant la sortie de la première structure de transmission de surmultiplication à l'essieu d'entrée de la boîte de vitesses étant conçue sous la forme d'une autre structure de transmission de réduction ou de surmultiplication.

4. Système d'entraînement central selon l'une quelconque des revendications 1 à 3, la boîte de vitesses (116), le moteur (102), la première structure de transmission de surmultiplication (106), la première structure de transmission de réduction (108), le premier entraînement par courroie ou chaîne (110) et le deuxième entraînement par courroie ou chaîne (108) étant contenus dans un carter (115).

5. Système d'entraînement central selon l'une quelconque des revendications 1 à 4, le moteur électrique étant positionné devant le vilebrequin (103) du véhicule.

6. Système d'entraînement central selon l'une quelconque des revendications 1 à 5, le moteur électrique étant positionné derrière le vilebrequin (103) du véhicule.

7. Système d'entraînement central selon l'une quelconque des revendications 1 à 6, le système d'entraînement de pédalier comprenant une structure de montage pour monter le système d'entraînement de pédalier sur un châssis du véhicule, le système de montage (330, 332) comprenant un mécanisme de réglage pour régler la position du système d'entraînement de pédalier par rapport à l'essieu arrière du véhicule.

8. Système d'entraînement central selon l'une quelconque des revendications 1 à 7, l'axe de rotation du moteur (102) coïncidant avec l'axe de rotation du vilebrequin (103).

9. Système d'entraînement central selon l'une quelconque des revendications 1 à 8, la boîte de vitesses (116) étant conçue comme un moyeu à engrenage interne.

10. Système d'entraînement central selon la revendication 9, le moyeu à engrenage interne (116) comprenant un mécanisme d'engrenage qui peut être réglé sur différents engrenages, le mécanisme d'engrenage étant de préférence contenu dans un carter fermé.

11. Système d'entraînement central selon l'une quelconque des revendications 1 à 10, l'essieu de sortie (107) comprenant une poulie (105) conçue pour recevoir une courroie ou une chaîne reliant l'essieu arrière du véhicule à l'essieu de sortie de la boîte de vitesses.

12. Véhicule actionné par pédales, par exemple une bicyclette, comprenant un système d'entraînement central selon l'une quelconque des revendications 1 à 11.

13. Véhicule actionné par pédales selon la revendication 12, l'essieu de sortie (107) étant relié à un essieu arrière du véhicule sur la base d'une troisième structure de transmission de réduction.

14. Véhicule actionné par pédales selon la revendication 13, la troisième structure de transmission de réduction comprenant un troisième entraînement par courroie ou chaîne (105).

15. Véhicule actionné par pédales selon la revendication 14, le système d'entraînement central étant monté sur un châssis du véhicule sur la base de la structure de montage (330, 332) pour régler la position du système d'entraînement central par rapport à l'essieu arrière du véhicule, le réglage de la position du système d'entraînement central fournissant un réglage de la tension d'une courroie ou d'une chaîne du troisième entraînement par courroie ou chaîne respectivement.
